# EUROPEAN PATENT APPLICATION

(11) **EP 4 412 261 A1**
(43) Date of publication of application: **07.08.2024**
(21) Application number: 21958054.5
(22) Date of filing: 27.09.2021
(51) Int. Cl.: H04W 4/40, H04L 1/18, H04W 74/08, H04L 1/16, H04W 72/04

(54) **FEEDBACK INFORMATION TRANSMISSION METHOD AND APPARATUS, AND STORAGE MEDIUM**

(71) Applicant: Beijing Xiaomi Mobile Software Co., Ltd., Beijing 100085 (CN)
(72) Inventor: ZHAO, Wensu, Beijing 100085 (CN); ZHAO, Qun, Beijing 100085 (CN)
(74) Representative: Stöckeler, Ferdinand
(86) International application number: PCT/CN2021/121112
(87) International publication number: WO 2023/044938

(57) **Abstract**

An information transmission method and apparatus, and a storage medium, which may be applied to systems such as the Internet of Vehicles, V2X, and V2V. The method comprises: determining time-frequency domain resources of M physical sidelink feedback channels (PSFCH) corresponding to a physical sidelink shared channel (PSSCH), M being an integer greater than 1; determining a PSFCH for sending hybrid automatic repeat request (HARQ) information corresponding to the PSSCH; and sending the HARQ information on the determined PSFCH. Therefore, after a first terminal fails to perform LBT on one PSFCH time-frequency domain resource leading to a failure in sending HARQ information, the first terminal may perform LBT on a PSFCH time-frequency domain resource among the M PSFCH time-frequency domain resources other than the failed PSFCH time-frequency domain resource, and after LBT has succeeded, sends HARQ information, so as to improve the stability of information transmission and improve communication efficiency.

## Description

### TECHNICAL FIELD

The present disclosure relates to a field of communication technologies, and particularly to a method and an apparatus for feedback information transmission, and a storage medium.

### BACKGROUND

Starting from release 12 (R12) of a third generation partnership project (3GPP) communication network, long term evolution (LTE) supports a device-to-device communication (i.e., sidelink (SL)) in a cellular network. At present, a terminal needs to perform a listen before talk (LBT) procedure during SL transmission in an unlicensed frequency band.

In the related art, the terminal needs to perform the LBT before transmitting hybrid automatic repeat request (HARQ) information on a physical sidelink feedback channel (PSFCH) resource corresponding to a physical sidelink shared channel (PSSCH), and if the LBT fails, a receiving terminal may not transmit the HARQ information on the corresponding PSFCH resource, i.e., the HARQ information cannot be transmitted. Therefore, there is an urgent need for a method solving the problem that the HARQ information cannot be transmitted due to the LBT failure of the PSFCH in the sidelink of the unlicensed frequency band.

### SUMMARY

A method and an apparatus for feedback information transmission and a storage medium are provided in embodiments of the disclosure, which are applicable to an Internet of Vehicles, such as vehicle-to-everything (V2X) communication, long term evolution-vehicle (LTE-V) and vehicle to vehicle (V2V) communication, or are applicable to intelligent driving, intelligent networked vehicles and other fields. By determining M physical sidelink feedback channel (PSFCH) time-frequency domain resources corresponding to the physical sidelink shared channel (PSSCH), it may avoid the problem that HARQ information cannot be fed back due to an LBT failure of the PSFCH in the unlicensed sidelink, thereby improving the stability of information transmission and the communication efficiency.

In a first aspect, a method for feedback information transmission is provided according to embodiments of the disclosure, which is performed by a first terminal. The method includes: determining M physical sidelink feedback channel (PSFCH) time-frequency domain resources corresponding to a physical sidelink shared channel (PSSCH), where the M is an integer greater than 1; determining a PSFCH for transmitting hybrid automatic repeat request (HARQ) information corresponding to the PSSCH; and transmitting the HARQ information on the determined PSFCH.

In the technical solution, the first terminal determines the M PSFCH time-frequency domain resources corresponding to the PSSCH, M being an integer greater than 1; determines the PSFCH for transmitting the HARQ information corresponding to the PSSCH; and transmits the HARQ information on the determined PSFCH. Therefore, when LBT on one PSFCH time-frequency domain resource fails and thus transmission of the HARQ information fails, the first terminal may perform the LBT on other PSFCH time-frequency domain resources than the failed PSFCH time-frequency domain resource in the M PSFCH time-frequency domain resources, and transmit the HARQ information after the LBT on other PSFCH time-frequency domain resources is successful, to improve the stability of information transmission and the communication efficiency.

In a second aspect, another method for feedback information transmission is provided according to embodiments of the disclosure, which is performed by a second terminal. The method includes: determining M PSFCH time-frequency domain resources corresponding to a PSSCH, where the M is an integer greater than 1; listening to the M PSFCH time-frequency domain resources; and receiving HARQ information corresponding to the PSSCH on the M PSFCH time-frequency domain resources.

In a third aspect, an apparatus for feedback information communication is provided according to embodiments of the disclosure. The apparatus for feedback information transmission has a part of or all functions of the first terminal in the method according to the first aspect. For example, the function of the apparatus for feedback information may possess functions in part of or all embodiments in the disclosure or may possess functions of any one embodiment in the disclosure. The functions may be implemented by hardware, or hardware to execute a corresponding software. The software or hardware includes one or more units or modules corresponding to the above functions.

In an implementation, a structure of the apparatus for feedback information transmission may include a transceiving module and a processing module. The processing module is configured to support the apparatus for feedback information transmission to perform corresponding functions in the above method. The transceiving module is configured to support communication between the apparatus for feedback information transmission and other devices. The apparatus for feedback information transmission may further include a storage module for coupling the transceiving module with the processing module and store a necessary computer program and data in the apparatus for feedback information transmission.

As an example, the processing module may be a processor, the transceiving module may be a transceiver or a communication interface, and the storage module may be a memory.

In an implementation, the apparatus for feedback information transmission includes: a processing module, configured to determine M PSFCH time-frequency domain resources corresponding to one PSSCH time-frequency domain resource, where the M is an integer greater than 1; and determine a PSFCH for transmitting HARQ information corresponding to the PSSCH; and a transceiving module, configured to transmit the HARQ information on the determined PSFCH.

In a fourth aspect, an apparatus for feedback information communication is provided according to embodiments of the disclosure. The apparatus for feedback information transmission has part of or all functions of the second terminal in the method according to the second aspect. For example, the function of the apparatus for feedback information may possess functions in part of or all embodiments in the disclosure or may possess functions of any one embodiment in the disclosure. The functions may be implemented by hardware, or hardware to execute a corresponding software. The software or hardware includes one or more units or modules corresponding to the above functions.

In an implementation, a structure of the apparatus for feedback information transmission may include a transceiving module and a processing module. The processing module is configured to support the apparatus for feedback information transmission to perform corresponding functions in the above method. The transceiving module is configured to support communication between the apparatus for feedback information transmission and other devices. The apparatus for feedback information transmission may further include a storage module for coupling the transceiving module with the processing module and store a necessary computer program and data in the apparatus for feedback information transmission.

In an implementation, the apparatus for feedback information transmission includes: a processing module, configured to determine M PSFCH time-frequency domain resources corresponding to one PSSCH time-frequency domain resource, where the M is an integer greater than 1; and listen to the M PSFCH time-frequency domain resources; and a transceiving module, configured to receive HARQ information corresponding to the PSSCH on the M PSFCH time-frequency domain resources.

In a fifth aspect, a communication device including a processor is provided according to embodiments of the disclosure. When the processor calls a computer program in the memory, the method according to the first aspect is performed.

In a sixth aspect, a communication device including a processor is provided according to embodiments of the disclosure. When the processor calls a computer program in the memory, the method according to the second aspect is performed.

In a seventh aspect, a communication device including a processor and a memory storing a computer program is provided in embodiments of the disclosure. When the computer program is executed by the processor, the communication device is caused to perform the method according to the first aspect.

In an eighth aspect, a communication device including a processor and a memory storing a computer program is provided in embodiments of the disclosure. When the computer program is executed by the processor, the communication device is caused to perform the method according to the second aspect.

In a ninth aspect, a communication device is provided in embodiments of the disclosure. The communication device includes a processor and an interface circuit. The interface circuit is configured to receive code instructions and transmit the code instructions to the processor; and the processor is configured to run the code instructions so that the device performs the method according to the above first aspect.

In a tenth aspect, a communication device is provided in embodiments of the disclosure. The device includes a processor and an interface circuit. The interface circuit is configured to receive code instructions and transmit the code instructions to the processor; and the processor is configured to run the code instructions so that the device performs the method according to the above second aspect.

In an eleventh aspect, a system for feedback information transmission is provided according to embodiments of the disclosure. The system includes the apparatus for information communication according to the third aspect and the apparatus for information communication according to the fourth aspect, or the system includes the communication device according to the fifth aspect and the communication device according to the sixth aspect, or the system includes the communication device according to the seventh aspect and the communication device according to the eighth aspect, or the system includes the communication device according to the ninth aspect and the communication device according to the tenth aspect.

In a twelfth aspect, a computer-readable storage medium storing instructions used by the first terminal is provided according to embodiments of the present disclosure. When the instructions are executed, the first terminal is caused to perform the method according to the first aspect.

In a thirteenth aspect, a readable storage medium storing instructions used by the second terminal is provided according to embodiments of the present disclosure. When the instructions are executed, the second terminal is caused to perform the method according to the second aspect.

In a fourteenth aspect, a computer program product including a computer program is provided in the present disclosure. When the computer program runs on a computer, the computer is caused to perform the method according to the first aspect.

In a fifteenth aspect, a computer program product including a computer program is further provided in the present disclosure. When the computer program runs on a computer, the computer is caused to perform the method according to the second aspect.

In a sixteenth aspect, a system on chip (SOC) is provided in the disclosure. The SOC includes at least one processor and an interface, and is configured to support the first terminal to perform functions involved in the first aspect, for example, to determine or process at least one of data and information involved in the above method. In a possible design, the SOC further includes a memory. The memory is configured to save a necessary computer program and data of the first terminal. The SoC may include a chip, or may include a chip and other discrete devices.

In a seventeenth aspect, a system on chip (SOC) is provided in the disclosure. The SOC includes at least one processor and an interface, and is configured to support a second terminal to perform functions involved in the second aspect, for example, to determine or process at least one of data and information involved in the above method. In a possible design, the SOC further includes a memory. The memory is configured to save a necessary computer program and data of the second terminal. The SoC may include a chip, or may include a chip and other discrete devices.

In an eighteenth aspect, a computer program is provided in the present disclosure. When the computer program runs on a computer, the computer is caused to perform the method according to the first aspect.

In a nineteenth aspect, a computer program is provided in the present disclosure. When the computer program runs on a computer, the computer is caused to perform the method according to the second aspect.

### BRIEF DESCRIPTION OF THE DRAWINGS

In order to explain technical solutions in the embodiments of the disclosure or in the related art more clearly, the drawings described in the embodiments of the disclosure or required in the related art will be briefly introduced below.
FIG. 1 is a diagram illustrating an architecture of a communication system according to embodiments of the present disclosure.
FIG. 2 is a flowchart illustrating a method for feedback information transmission according to embodiments of the present disclosure.
FIG. 3 is a flowchart illustrating another method for feedback information transmission according to embodiments of the present disclosure.
FIG. 4 is a flowchart illustrating yet another method for feedback information transmission according to embodiments of the present disclosure.
FIG. 5 is a flowchart illustrating yet another method for feedback information transmission according to embodiments of the present disclosure.
FIG. 6 is a flowchart illustrating yet another method for feedback information transmission according to embodiments of the present disclosure.
FIG. 7 is a flowchart illustrating yet another method for feedback information transmission according to embodiments of the present disclosure.
FIG. 8 is a flowchart illustrating yet another method for feedback information transmission according to embodiments of the present disclosure.
FIG. 9 is a flowchart illustrating yet another method for feedback information transmission according to embodiments of the present disclosure.
FIG. 10 is a flowchart illustrating yet another method for feedback information transmission according to embodiments of the present disclosure.
FIG. 11 is a flowchart illustrating yet another method for feedback information transmission according to embodiments of the present disclosure.
FIG. 12 is a flowchart illustrating yet another method for feedback information transmission according to embodiments of the present disclosure.
FIG. 13 is a flowchart illustrating yet another method for feedback information transmission according to embodiments of the present disclosure.
FIG. 14 is a structural diagram illustrating an apparatus for feedback information transmission according to embodiments of the present disclosure.
FIG. 15 is a structural diagram illustrating a communication device according to embodiments of the present disclosure.
FIG. 16 is a structural diagram illustrating a chip according to embodiments of the present disclosure.

### DETAILED DESCRIPTION

For convenience of understanding, the terms involved in the disclosure are introduced first.

### 1. Vehicle-to-everything (V2X) communication

The V2X communication refers to communication between a vehicle and everything outside the vehicle, and may include but not limited to vehicle to vehicle (V2V) communication, vehicle to infrastructure (V2I) communication, vehicle to pedestrian (V2P) communication, and vehicle to network (V2N) communication.

In order to understand a method and an apparatus for feedback information transmission and a storage medium in embodiments of the disclosure better, a communication system to which embodiments of the present disclosure are applicable is described below.

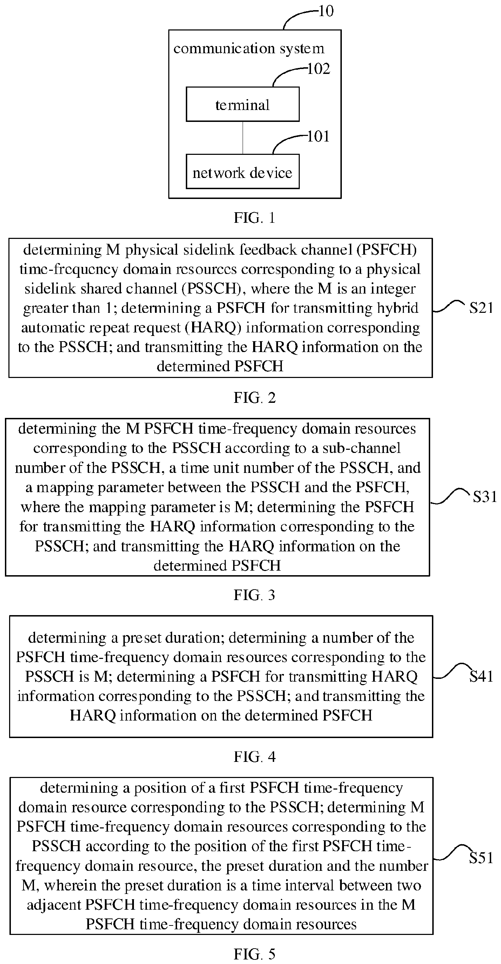

Referring to FIG. 1, FIG. 1 is a diagram illustrating an architecture of a communication system 10 according to embodiments of the present disclosure. The communication system 10 may include, but is not limited to, one network device and one terminal device. The number and the form of the devices shown in FIG. 1 are only as an example and do not constitute a limitation to embodiments of the present disclosure. Two or more network devices and two or more network devices may be included in practical applications. The communication system 100 as illustrated in FIG. 1 includes one network device 101 and one terminal 102 as an example.

It needs to be noted that the technical solutions in embodiments of the present disclosure are applicable to various communication systems, for example, a long term evolution (LTE) system, a 5th generation (5G) mobile communication system, a 5G new radio (NR) system or other future new mobile communication systems. It should be noted that the sidelink in the embodiments of the disclosure may be referred to as a side link or a direct link.

The network device 101 in embodiments of the disclosure is an entity for transmitting or receiving a signal at a network side. For example, the network device 101 may be an evolved NodeB (eNB), a transmission reception point (TRP), a next generation NodeB (gNB) in an NR system, a base station in other future mobile communication systems, or an access node in a wireless fidelity (Wi-Fi^{™}) system. The specific technology and the specific device form adopted by the network device are not limited in embodiments of the present disclosure. The network device according to embodiments of the present disclosure may consist of a central unit (CU) and a distributed unit (DU). The CU may also be referred to as a control unit. By using a structure of the CU-DU, protocol layers of the network device such as a base station may be split, functions of a part of protocol layers are placed in the CU for centralized control, and functions of a remaining part or all of the protocol layers are distributed in the DU, and the DU is centrally controlled by the CU.

The terminal 102 in embodiments of the disclosure is an entity for receiving or transmitting a signal at a user side, for example, a mobile phone. The terminal may be referred to as a user equipment (UE), a mobile station (MS), a mobile terminal (MT), etc. The terminal may be an automobile with a communication function, a smart automobile, a mobile phone, a wearable device, a tablet computer (Pad), a computer with a wireless transceiving function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in transportation safety, a wireless terminal in a smart home, etc. The specific technology and the specific device form adopted by the terminal are not limited in embodiments of the present disclosure.

It may be understood that, the communication system described in embodiments of the present disclosure are intended to explain technical solutions of embodiments of the present disclosure more clearly, and does not constitute a limitation to the technical solutions according to the embodiments of the present disclosure. Those skilled in the art know that, with the evolution of the system architecture and the emergence of the new business scenario, the technical solutions provided in the embodiments of the present disclosure are equally applied to similar technical problems.

A method and an apparatus for feedback information transmission and a storage medium according to the disclosure are described in combination with attached drawings.

Referring to FIG. 2, FIG. 2 is a flowchart illustrating a method for feedback information transmission according to embodiments of the present disclosure.

With the continuous emergence of a variety of new services and new applications, the terminal will have higher and higher performance requirements for a transmission bandwidth, a communication rate, a communication delay, reliability, and scalability in the sidelink. The potential diverse application scenarios and requirements in future cannot be satisfied if the terminal only relies on limited licensed spectrums of an operator. Therefore, it is necessary to research and design a sidelink-unlicensed technology applicable to an unlicensed frequency band.

In the related art, a method is needed for solving the problem that the HARQ information cannot be fed back due to the LBT failure of the PSFCH in the unlicensed frequency band of the sidelink. The method for feedback information transmission is provided in the embodiments of the disclosure, to at least solve the above technical problem.

As illustrated in FIG. 2, a method for feedback information transmission is provided according to embodiments of the disclosure, which is performed by a first terminal. The method includes but not limited to following steps.

At step S21, M physical sidelink feedback channels (PSFCH) time-frequency domain resources corresponding to a physical sidelink shared channel (PSSCH) are determined, M being an integer greater than 1; a PSFCH for transmitting hybrid automatic repeat request (HARQ) information corresponding to the PSSCH is determined; and the HARQ information is transmitted on the determined PSFCH.

The PSSCH transmitted on one slot only has one feedback resource position according to a mapping relationship between the PSSCH and the PSFCH in Release 16. The first terminal needs to first perform the LBT, before transmitting the HARQ information on the PSFCH corresponding to the PSSCH, and may transmit the HARQ information on the PSFCH corresponding to the PSSCH only when the LBT is successful.

However, in the existing mapping relationship between the PSSCH and the PSFCH, the PSSCH transmitted on one slot only has one feedback resource position. Once the LBT fails, the first terminal cannot transmit the HARQ information on the PSFCH corresponding to the PSSCH, and the second terminal cannot receive the HARQ information.

Thus, in the embodiments of the disclosure, the M PSFCH time-frequency domain resources corresponding to the PSSCH time-frequency domain resource are determined, M being an integer greater than 1. Further, the PSFCH for transmitting the HARQ information corresponding to the PSSCH is determined, and the HARQ information is transmitted on the determined PSFCH.

It needs to be noted that, when a PSFCH for transmitting the HARQ information corresponding to the PSSCH is determined, the first terminal needs to first perform the LBT before transmitting the HARQ information corresponding to the PSSCH on the PSFCH. In embodiments of the disclosure, determining the PSFCH for transmitting the HARQ information corresponding to the PSSCH means that LBT on the determined PSFCH has been completed , and the HARQ information corresponding to the PSSCH may be transmitted.

It may be understood that, the first terminal itself has a capability of transmitting the HARQ information corresponding to the PSSCH on one PSFCH on which the LBT is successful, or a capability of transmitting the HARQ information corresponding to the PSSCH on a PSFCH of the M PSFCHs corresponding to the PSSCH that is located behind the PSFCH on which the LBT fails.

In an example embodiment, M is 2. It is determined that two PSFCH time-frequency domain resources correspond to the PSSCH time-frequency domain resource, and a first PSFCH is further determined as the PSFCH for transmitting the HARQ information corresponding to the PSSCH. Then, the HARQ information is transmitted on the determined first PSFCH.

In another example embodiment, M is 3. It is determined that three PSFCH time-frequency domain resources correspond to the PSSCH time-frequency domain resource, and a second PSFCH is further determined as the PSFCH for transmitting the HARQ information corresponding to the PSSCH. Then, the HARQ information is transmitted on the determined second PSFCH.

It needs to be noted that, the above example is only illustrative. The value of M may be 4 or above in embodiments of the disclosure, which is not a limitation of the embodiments of the disclosure, which is not specifically limited in embodiments of the disclosure.

It may be understood that, the PSFCH time-frequency domain resources include PSFCH time domain resources and PSFCH frequency domain resources. The HARQ information may be referred to as an HARQ codebook.

In the embodiments of the disclosure, the M PSFCH time-frequency domain resources corresponding to the PSSCH are determined, M being an integer greater than 1; the PSFCH for transmitting the HARQ information corresponding to the PSSCH is determined; and the HARQ information is transmitted on the determined PSFCH. Therefore, when LBT on one PSFCH time-frequency domain resource fails and thus transmission of the HARQ information fails, the first terminal may perform the LBT on other PSFCH time-frequency domain resources than the failed PSFCH time-frequency domain resource in the M PSFCH time-frequency domain resources, and transmit the HARQ information after the LBT on other PSFCH time-frequency domain resources is successful, to improve the stability of information transmission and the communication efficiency.

As illustrated in FIG. 3, another method for feedback information transmission is provided according to embodiments of the disclosure, which is performed by a first terminal. The method includes but not limited to following steps.

At S31, the M PSFCH time-frequency domain resources corresponding to the PSSCH are determined according to a sub-channel number of the PSSCH, a time unit number of the PSSCH, and a mapping parameter between the PSSCH and the PSFCH, where the mapping parameter is M; a PSFCH for transmitting the HARQ information corresponding to the PSSCH is determined; and the HARQ information is transmitted on the determined PSFCH.

In embodiments of the disclosure, the mapping parameter M may be configured or preconfigured by the network device for the first terminal, or may be agreed based on a protocol, or may be received from other devices, which is not limited in embodiments of the disclosure.

In embodiments of the disclosure, a mapping relationship being 1 to M between the PSSCH and the PSFCH may be obtained according to the sub-channel number of the PSSCH, the slot number of the PSSCH, and the mapping parameter of the PSFCH, so that the M PSFCH time-frequency domain resources corresponding to the PSSCH may be determined.

For example, the mapping parameter is M, the value of which is 2. According to the mapping relationship being 1 to M, the PSFCH time-frequency domain resources corresponding to the PSSCH on the first slot are a time-frequency domain resource located on the third slot and a time-frequency domain resource located on the fourth slot. When the LBT at the PSFCH on the third slot corresponding to the PSSCH on the first slot fails, the LBT may performed at the PSFCH resource on the fourth slot, and the HARQ information may be transmitted after the LBT at the PSFCH resource on the fourth slot is successful, which may improve the stability of information transmission and the communication efficiency.

It needs to be noted that, the above example is only illustrative, which is not a limitation of embodiments of the disclosure. The mapping parameter is M, the value of which may be 3 or above, which is not specifically limited in embodiments of the disclosure.

In an optional implementation, the time unit may be a frame, or a subframe, or a slot, a mini-slot, a transmission time interval (TTI) or a symbol. In another optional implementation, the time unit may be a second, or a millisecond or a microsecond.

In some embodiments, the time unit is a slot.

As illustrated in FIG. 4, yet another method for feedback information transmission is provided according to embodiments of the disclosure, which is performed by a first terminal. The method includes but not limited to following steps.

At S41, a preset duration is determined; a number of the PSFCH time-frequency domain resources corresponding to the PSSCH is determined as M; a PSFCH for transmitting HARQ information corresponding to the PSSCH is determined; and the HARQ information is transmitted on the determined PSFCH.

The unit of the preset duration may be a slot, and it is determined that the preset duration may be configured or preconfigured by the network device for the first terminal, or may be agreed based on a protocol, or may be received from other devices, which is not limited in embodiments of the disclosure.

In embodiments of the disclosure, it is determined that the number of the PSFCH time-frequency domain resources corresponding to the PSSCH is M, which may be configured or preconfigured by the network device to the first terminal, or may be agreed based on a protocol, or a corresponding configuration may be received from other devices, which is not limited in embodiments of the disclosure.

It needs to be noted that, when the PSFCH for transmitting the HARQ information corresponding to the PSSCH is determined, the first terminal needs to perform the LBT before transmitting the HARQ information corresponding to the PSSCH on the PSFCH. In embodiments of the disclosure, determining the PSFCH for transmitting the HARQ information corresponding to the PSSCH means that LBT on the determined PSFCH has been completed the LBT, and the HARQ information corresponding to the PSSCH may be transmitted.

In embodiments of the disclosure, the number of the PSFCH time-frequency domain resources corresponding to the PSSCH is determined as M, the PSFCH for transmitting the HARQ information corresponding to the PSSCH is determined, and the HARQ information is transmitted on the determined PSFCH. Therefore, when LBT on one PSFCH time-frequency domain resource fails and thus transmission of the HARQ information fails, the first terminal may perform the LBT on other PSFCH time-frequency domain resources than the failed PSFCH time-frequency domain resource in the M PSFCH time-frequency domain resources, and transmit the HARQ information after the LBT on other PSFCH time-frequency domain resources is successful, to improve the stability of information transmission and the communication efficiency.

As illustrated in FIG. 5, yet another method for feedback information transmission is provided according to embodiments of the disclosure, which is performed by a first terminal. The method includes but not limited to following steps.

At S51, a position of a first PSFCH time-frequency domain resource corresponding to the PSSCH is determined; M PSFCH time-frequency domain resources corresponding to the PSSCH are determined according to the position of the first PSFCH time-frequency domain resource, the preset duration and the number M. The preset duration is a time interval between two adjacent PSFCH time-frequency domain resources in the M PSFCH time-frequency domain resources.

In embodiments of the disclosure, the position of the first PSFCH time-frequency domain resource corresponding to the PSSCH is determined as slot n; the preset duration 'sl-PSFCH-Time-Interval' is determined; the number of the PSFCH time-frequency domain resources corresponding to the PSSCH is determined as M, and M PSFCH time-frequency domain resources for transmitting the PSSCH are determined; and HARQ information is transmitted on the determined PSFCHs. The preset duration is a time interval between two adjacent PSFCH time-frequency domain resources in the M PSFCH time-frequency domain resources.

The unit of the preset duration may be a slot. The preset duration may be configured or preconfigured by a system, or the configuration may be based on UE specific or cell specific or a resource pool. Alternatively, the preset duration may be agreed based on a protocol, or received from other devices, which is not limited in embodiments of the disclosure.

In embodiments of the disclosure, it is determined that the position of the first PSFCH time-frequency domain resource corresponding to the PSSCH may be a position of one PSFCH time-frequency domain resource determined according to the existing mapping relationship between the PSSCH and the PSFCH in a protocol, or may be agreed based on a protocol, or a corresponding configuration may be received from other devices, which is not limited in embodiments of the disclosure.

For example, M PSFCH resource positions are added. The first PSFCH resource time domain position is the slot n, and the second added PSFCH resource time domain position is a slot (n+sl-PSFCH-Time-Interval-r16). The similar calculation manner performs in order until the added Mth PSFCH resource time domain position, which is a slot [n+sl-PSFCH-Time-Interval-r16×(M-1)].

It needs to be noted that, when the PSFCH for transmitting the HARQ information corresponding to the PSSCH is determined, the first terminal needs to first perform the LBT before transmitting the HARQ information corresponding to the PSSCH on the PSFCH. In embodiments of the disclosure, determining the PSFCH for transmitting the HARQ information corresponding to the PSSCH means that LBT on the determined PSFCH has been completed, and the HARQ information corresponding to the PSSCH may be transmitted.

In embodiments of the disclosure, when the position of the first PSFCH time-frequency domain resource corresponding to the PSSCH, the time interval between each two PSFCH time-frequency domain resources are determined, and the number of the PSFCH time-frequency domain resources corresponding to the PSSCH is determined as M, M PSFCH time-frequency domain resources corresponding to the PSSCH may be determined. Therefore, when LBT on one PSFCH time-frequency domain resource fails and thus transmission of the HARQ information fails, the first terminal may perform the LBT on other PSFCH time-frequency domain resources than the failed PSFCH time-frequency domain resource in the M PSFCH time-frequency domain resources, and transmit the HARQ information after the LBT on other PSFCH time-frequency domain resources is successful, to improve the stability of information transmission and the communication efficiency.

For example, it is determined that one PSFCH corresponding to the PSSCH is a PSFCH resource located on the third slot according to the existing mapping relationship between the PSSCH and the PSFCH, and when it is determined that a number of PSFCH time-frequency domain resources corresponding to the PSSCH is increased to 2 and the preset duration (i.e., the time interval between two adjacent PSFCH time domain resources) is 1 slot, it may be determined that the 2 PSFCHs corresponding to the PSSCH are a PSFCH resource located on the third slot and a PSFCH resource on the fourth slot.

In some embodiments, the preset duration is an integer multiple of a PSFCH resource period (i.e., periodPSFCHresource).

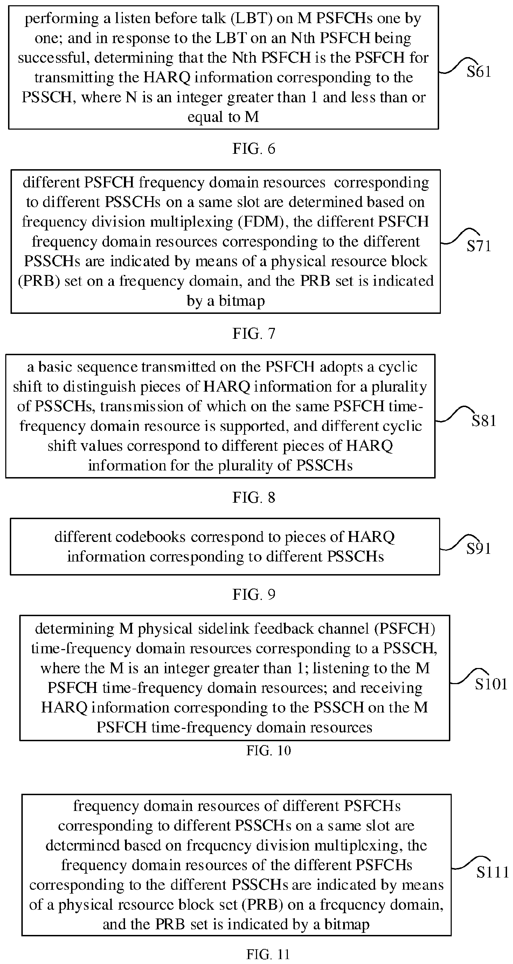

As illustrated in FIG. 6, yet another method for feedback information transmission is provided according to embodiments of the disclosure, which is performed by a first terminal. The method includes but not limited to following steps.

At S61, a listen before talk (LBT) is performed on M PSFCHs one by one; and in response to the LBT on an Nth PSFCH being successful, it is determined that the Nth PSFCH is the PSFCH for transmitting the HARQ information corresponding to the PSSCH, where N is an integer greater than 1 and less than or equal to M.

In embodiments of the disclosure, in response to determining the M PSFCH time-frequency domain resources correspond to the PSSCH, the PSFCH for transmitting the HARQ information corresponding to the PSSCH is determined. The first terminal may perform LBT on the M PSFCHs one by one; and when the LBT on the Nth PSFCH is successful, the first terminal determines that the Nth PSFCH is the PSFCH for transmitting the HARQ information corresponding to the PSSCH, where N is an integer greater than 1 and less than or equal to M.

For example, N is 2, and M is 3. When it is determined that 3 PSFCH time-frequency domain resources correspond to the PSSCH, the PSFCH for transmitting the HARQ information corresponding to the PSSCH is determined. The first terminal may perform the LBT on the 3 PSFCHs one by one. For example, the first terminal may perform the LBT on the second PSFCH after the LBT on the first PSFCH fails, and when the LBT on the second PSFCH is successful, the first terminal determines that the second PSFCH is the PSFCH for transmitting the HARQ information corresponding to the PSSCH.

It needs to be noted that, the above step S61 may be implemented alone or in combination with any one of other steps in the disclosure. For example, the above step S61 may be implemented together with S21 and/or S31 and/or S41 and/or S51 in embodiments of the disclosure, which is not specifically limited in embodiments of the disclosure.

In some embodiments, on the PSFCH in the same slot, there may be pieces of HARQ information for the plurality of PSSCHs to be transmitted. Therefore, pieces of HARQ information for different PSSCHs need to be distinguished from each other.

Thus, as illustrated in FIG. 7, yet another method for feedback information transmission is provided according to embodiments of the disclosure, which is performed by a first terminal. The method includes but not limited to following steps.

At S71, different PSFCH frequency domain resources corresponding to different PSSCHs on a same slot are determined based on frequency division multiplexing (FDM), the different PSFCH frequency domain resources corresponding to the different PSSCHs are indicated by means of a physical resource block (PRB) set on a frequency domain, and the PRB set is indicated by a bitmap.

In embodiments of the disclosure, the PSFCH adopts the FDM, and the PSFCH frequency domain resources corresponding to the different PSSCHs on the same slot are distinguished by a physical resource block (PRB) set indicated by the bitmap on the frequency domain. For example, PRB set 1 indicates a position of a PSFCH time-frequency domain resource corresponding to the first PSSCH on the same slot, and PRB set M indicates a position of a PSFCH time-frequency domain resource corresponding to the Mth PSSCH on the same slot. The PRB set is indicated by the bitmap.

For example, when M is 2, PSFCH frequency domain resources corresponding to the different PSSCHs on the same slot are distinguished by two PRB sets indicated by the bitmap on the frequency domain. The PRB set 1 indicates a position of a PSFCH time-frequency domain resource corresponding to the first PSSCH on the same slot, and the PRB set 2 indicates a position of a PSFCH time-frequency domain resource corresponding to the second PSSCH on the same slot.

For example, when HARQ information corresponding to the PSSCH on the first slot and HARQ information corresponding to the PSSCH on the second slot is to be fed back on the PSFCH resources on the fourth slot, the PRB set 1 is configured as the PSFCH time-frequency domain resource on the fourth slot corresponding to the PSSCH on the first slot, and the PRB set 2 is configured as the PSFCH time-frequency domain resource on the fourth slot corresponding to the PSSCH on the second slot.

It needs to be noted that, the above step S71 may be implemented alone or in combination with any one of other steps in the disclosure. For example, the above step S71 may be implemented together with S21 and/or S31 and/or S41 and/or S51 and/or S61 in embodiments of the disclosure, which is not specifically limited in embodiments of the disclosure.

As illustrated in FIG. 8, yet another method for feedback information transmission is provided according to embodiments of the disclosure, which is performed by a first terminal. The method includes but not limited to following steps.

At S81, a basic sequence transmitted on the PSFCH adopts a cyclic shift to distinguish pieces of HARQ information for a plurality of PSSCHs, transmission of which on the same PSFCH time-frequency domain resource is supported, and different cyclic shift values correspond to different pieces of HARQ information for the plurality of PSSCHs.

In embodiments of the disclosure, the PSFCH resource is multiplexed, and it is supported that HARQ feedback with M bits corresponds to HARQ feedback results for the M PSSCHs simultaneously on the same PSFCH resource, while the feedbacks of the M PSSCHs are distinguished by a cyclic shift, where different cyclic shift values indicate different pieces of HARQ information.

For example, assuming the transmission is of 2 bits, the basic sequence transmitted on the PSFCH carries the pieces of HARQ information through the cyclic shift, four phase values of the cyclic shift are respectively 0, π/2, π, 3π/2, which indicate all situations of 2-bit HARQ information, that is, {NACK ACK}, {NACK NACK}, {ACK NACK}, {NACK ACK}. When the phase value is 0, it indicates {NACK ACK}, that is, a result of the HARQ for the PSSCH on the first slot is NACK, and a result of the HARQ for the PSSCH on the second slot is ACK.

It needs to be noted that, the above step S81 may be implemented alone or in combination with any one of other steps in the disclosure. For example, the above step S81 may be implemented together with S21 and/or S31 and/or S41 and/or S51 and/or S61 in embodiments of the disclosure, which is not specifically limited in embodiments of the disclosure.

As illustrated in FIG. 9, yet another method for feedback information transmission is provided according to embodiments of the disclosure, which is performed by a first terminal. The method includes but not limited to following steps.

At S91, different codebooks correspond to pieces of HARQ information corresponding to different PSSCHs.

In embodiments of the disclosure, a new codebook is designed, and indicates feedback results for a plurality of PSSCHs, and bits in the codebook from high to low sequentially indicate the HARQ information for the PSSCH on the corresponding slots from front to back.

For example, when LBT fails at the PSFCH resource on the third slot, and the PSFCH resource on the third slot may not be used to transmit the HARQ information for the PSSCH on the first slot. Assuming that the LBT is successful at the PSFCH resource on the fourth slot, the PSFCH resource on the fourth slot corresponds to HARQ information for the PSSCH on the first slot and HARQ information for the PSSCH on the second slot. In this case, the PSFCH resource may feedback M bits. For example, when M=2, the codebook is designed as 10, the high bit 1 in the codebook corresponds to HARQ information for the PSSCH on the first slot in front, and the low bit 0 corresponds to HARQ information for the PSSCH on the second slot in back.

It needs to be noted that, the above step S91 may be implemented alone or in combination with any one of other steps in the disclosure. For example, the above step S91 may be implemented together with S21 and/or S31 and/or S41 and/or S51 and/or S61 in embodiments of the disclosure, which is not specifically limited in embodiments of the disclosure.

As illustrated in FIG. 10, yet another method for feedback information transmission is provided according to embodiments of the disclosure, which is performed by a second terminal. The method includes but not limited to following steps.

At S101, M physical sidelink feedback channel (PSFCH) time-frequency domain resources corresponding to a PSSCH are determined, where the M is an integer greater than 1; the M PSFCH time-frequency domain resources are listened to; and HARQ information corresponding to the PSSCH is received on the M PSFCH time-frequency domain resources.

In embodiments of the disclosure, the M PSFCH time-frequency domain resources corresponding to the PSSCH are determined, where the M is an integer greater than 1; the M PSFCH time-frequency domain resources are listened to; and the HARQ information corresponding to the PSSCH is received on the M PSFCH time-frequency domain resources.

It needs to be noted that, the LBT needs to be performed before the HARQ information corresponding to the PSSCH is received on the PSFCH. In embodiments of the disclosure, the second terminal listens to the M PSFCH time-frequency domain resources, and receives the HARQ information corresponding to the PSSCH on the PSFCH where the LBT is successful.

It may be understood that, the PSFCH time-frequency domain resources include PSFCH time domain resources and PSFCH frequency domain resources. The HARQ information may be an HARQ codebook.

Thus, in embodiments of the disclosure, the M PSFCH time-frequency domain resources corresponding to the PSSCH are determined, where the M is an integer greater than 1; the M PSFCH time-frequency domain resources are listened to; and the HARQ information corresponding to the PSSCH is received on the M PSFCH time-frequency domain resources. As such, the second terminal may transmit the HARQ information corresponding to the PSSCH on the PSFCH where the LBT is successful among the M PSFCH time-frequency domain resources, which may improve the stability of information transmission and the communication efficiency.

As illustrated in FIG. 11, yet another method for feedback information transmission is provided according to embodiments of the disclosure, which is performed by a second terminal. The method includes but not limited to following steps.

At S111, different PSFCH frequency domain resources corresponding to different PSSCHs on a same slot are determined based on frequency division multiplexing (FDM), the different PSFCH frequency domain resources corresponding to the different PSSCHs are indicated by means of a physical resource block (PRB) set on a frequency domain, and the PRB set is indicated by a bitmap.

In embodiments of the disclosure, the PSFCH adopts the FDM, and the PSFCH frequency domain resources corresponding to the different PSSCHs on the same slot are distinguished by means of the PRB set indicated by the bitmap on the frequency domain. PRB set 1 indicates a position of a PSFCH time-frequency domain resource corresponding to a first PSSCH on the same slot, and PRB set M indicates a position of a PSFCH time-frequency domain resource corresponding to an Mth PSSCH on the same slot. The PRB set is indicated by the bitmap.

For example, when M is 2, PSFCH frequency domain resources corresponding to the different PSSCHs on the same slot are distinguished by two PRB sets indicated by the bitmap on the frequency domain. PRB set 1 indicates a position of a PSFCH time-frequency domain resource corresponding to a first PSSCH on the same slot, and PRB set 2 indicates a position of a PSFCH time-frequency domain resource corresponding to a second PSSCH on the same slot.

For example, when HARQ information corresponding to the PSSCH on the first slot and HARQ information corresponding to the PSSCH on the second slot is to be fed back on the PSFCH resources on the fourth slot, the PRB set 1 is configured as the PSFCH time-frequency domain resource on the fourth slot corresponding to the PSSCH on the first slot, and the PRB set 2 is configured as the PSFCH time-frequency domain resource on the fourth slot corresponding to the PSSCH on the second slot.

It needs to be noted that, the above step S111 may be implemented alone or in combination with any one of other steps in the disclosure. For example, the above step S 111 may be implemented together with S101 in embodiments of the disclosure, which is not specifically limited in embodiments of the disclosure.

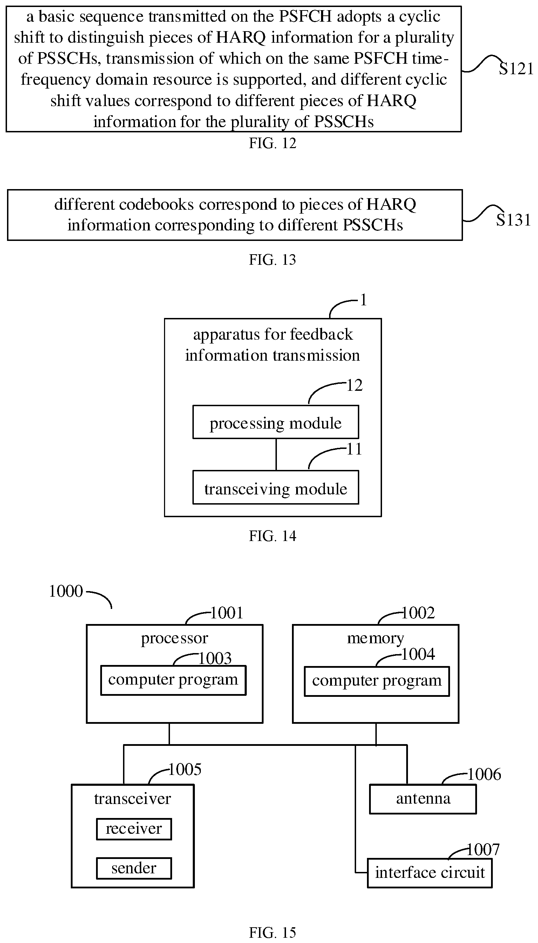

As illustrated in FIG. 12, yet another method for feedback information transmission is provided according to embodiments of the disclosure, and is performed by a second terminal. The method includes but not limited to following steps.

At S121, a basic sequence transmitted on the PSFCH adopts a cyclic shift to distinguish pieces of HARQ information for a plurality of PSSCHs, transmission of which on the same PSFCH time-frequency domain resource is supported, and different cyclic shift values correspond to different pieces of HARQ information for the plurality of PSSCHs.

In embodiments of the disclosure, the PSFCH resource is multiplexed, and it is supported that HARQ feedback with M bits corresponds to HARQ feedback results for the M PSSCHs simultaneously on the same PSFCH resource, while the feedbacks of the M PSSCHs are distinguished by a cyclic shift, where different cyclic shift values indicate different pieces of HARQ information.

For example, assuming the transmission is of 2 bits, the basic sequence transmitted on the PSFCH carries the pieces of HARQ information through the cyclic shift, four phase values of the cyclic shift are respectively 0, π/2, π, 3π/2, 2π, which indicate all situations of 2-bit HARQ information, that is, {NACK ACK}, {NACK NACK}, {ACK NACK}, {NACK ACK}. When the phase value is 0, it indicates {NACK ACK}, that is, a result of the HARQ for the PSSCH on the first slot is NACK, and a result of the HARQ for the PSSCH on the second slot is ACK.

It needs to be noted that, the above step S121 may be implemented alone or in combination with any one of other steps in the disclosure. For example, the above step S121 may be implemented together with S101 in embodiments of the disclosure, which is not specifically limited in embodiments of the disclosure.

As illustrated in FIG. 13, yet another method for feedback information transmission is provided according to embodiments of the disclosure, which is performed by a second terminal. The method includes but not limited to following steps.

At S131, different codebooks correspond to pieces of HARQ information corresponding to different PSSCHs.

In embodiments of the disclosure, a new codebook is designed, and indicates feedback results for a plurality of PSSCHs, and bits in the codebook from high to low sequentially indicate the HARQ information for the PSSCH on the corresponding slots from front to back.

For example, when LBT fails at the PSFCH resource on the third slot, and the PSFCH resource on the third slot may not be used to transmit the HARQ information for the PSSCH on the first slot. Assuming that the LBT is successful at the PSFCH resource on the fourth slot, the PSFCH resource on the fourth slot corresponds to HARQ information for the PSSCH on the first slot and HARQ information for the PSSCH on the second slot. In this case, the PSFCH resource may feedback M bits. For example, when M=2, the codebook is designed as 10, the high bit 1 in the codebook corresponds to HARQ information for the PSSCH on the first slot in front, and the low bit 0 corresponds to HARQ information for the PSSCH on the second slot in back.

It needs to be noted that, the above step S131 may be implemented alone or in combination with any one of other steps in the disclosure. For example, the above step S131 may be implemented together with S101 in embodiments of the disclosure, which is not specifically limited in embodiments of the disclosure.

In embodiments according to the disclosure, the proposed methods are introduced mainly respectively from the perspective of the first terminal and the second terminal. To achieve various functions in the methods according to the embodiments of the disclosure, the first terminal and the second terminal each may include a hardware structure and a software module, to achieve the above functions in the form of the hardware structure, the software module, or a combination of the hardware structure and the software module. A certain function in the above functions may be performed by the hardware structure, the software module or a combination of the hardware structure and the software module.

As illustrated in FIG. 14, FIG. 14 is a structural diagram illustrating an apparatus 1 for feedback information transmission according to embodiments of the present disclosure. The apparatus 1 for feedback information transmission as illustrated in FIG. 14 may include a transceiving module 11 and a processing module 12. The transceiving module 11 may include a transmitting module and/or a receiving module. The transmitting module is configured to implement a transmitting function, the receiving module is configure to implement a receiving function, and the transceiving module 12 may implement a transmitting function and/or a receiving function.

The apparatus 1 for feedback information transmission may be a first terminal or a second terminal, an apparatus in a terminal, or an apparatus capable of being matched and used with the terminal.

When the apparatus 1 for feedback information transmission is the first terminal,
the apparatus may includes: a processing module 12, configured to determine M physical sidelink feedback channel (PSFCH) time-frequency domain resources corresponding to one physical sidelink shared channel (PSSCH) time-frequency domain resource, where the M is an integer greater than 1; and determine a PSFCH for transmitting hybrid automatic repeat request (HARQ) information corresponding to the PSSCH; and a transceiving module, configured to transmit the HARQ information on the determined PSFCH.

When the apparatus 1 for feedback information transmission is the second terminal,
the apparatus includes: a processing module 12, configured to determine M PSFCH time-frequency domain resources corresponding to one PSSCH time-frequency domain resource, where the M is an integer greater than 1; and listen to the M PSFCH time-frequency domain resources; and a transceiving module, configured to receive HARQ information corresponding to the PSSCH on the M PSFCH time-frequency domain resources.

With regards to the apparatus 1 for feedback information transmission in the above embodiments, the specific way in which each module performs the operation has been described in embodiments of the method and will not be elaborated here. The apparatus 1 for feedback information transmission in the above embodiments achieves the same or similar beneficial effect with the method for feedback information transmission in the above-described embodiments, which will not be repeated here.

Referring to FIG. 15, FIG. 15 is a structural diagram illustrating a communication device 1000 according to embodiments of the present disclosure. The communication device 1000 may be a first terminal or a second terminal, or may be a chip, a system on chip (SoC) or a processor that supports the terminal to implement the method. The communication device 1000 may be configured to implement the method described in the method embodiments, and may refer to descriptions in the method embodiments.

The communication device 1000 may include one or more processors 1001. The processor 1001 may include a general purpose processor or a dedicated processor. For example, the processor 141 may be a baseband processor or a central processor. The baseband processor may be configured to process a communication protocol and communication data, and the central processor may be configured to control a communication device (e.g., a base station, a baseband chip, a terminal device, a terminal device chip, a DU or CU, etc.), to execute a computer program, and process data of the computer program.

Optionally, the communication device 1000 may further include one or more memories 1002 with a computer program 1004 stored thereon. The memory 1002 executes the computer program 1004 so that the communication device 1000 performs the method as described in the above method embodiments. Optionally, the memory 1002 may further store data. The communication device 1000 and the memory 1002 may be independently configured or integrated together.

Optionally, the communication device 1000 may further include a transceiver 1005 and an antenna 1006. The transceiver 1005 may be referred to as a transceiving unit, a transceiver or a transceiving circuit, which may be configured to achieve a transceiving function. The transceiver 1005 may include a receiver and a transmitter. The receiver may be referred to as a receiver end or a receiving circuit, etc., for implementing a receiving function; the transmitter may be referred to as a transmitter end or a transmission circuit, etc. for implementing a transmitting function.

Optionally, the communication device 1000 may further include one or more interface circuits 1007. The interface circuit 1007 is configured to receive code instructions and transmit the code instructions to the processor 1001. The processor 1001 executes the code instructions so that the communication device 1000 performs the method described according to any above method embodiment.

The communication device 1000 is a first terminal: the processor 1001 is configured to execute step 21 in FIG. 2; step 31 in FIG. 3; step 41 in FIG. 4; step 51 in FIG. 5; step 61 in FIG. 6; step71 in FIG. 7; step 81 in FIG. 8; and step 91 in FIG. 9.

The communication device 1000 is a second terminal: the processor 1001 is configured to execute S101 in FIG. 10; S111 in FIG. 11; S121 in FIG. 12; and step S131 in FIG. 13.

In an implementation, the processor 1001 may include a transceiver configured to implement receiving and transmitting functions. For example, the transceiver may be a transceiving circuit, or an interface, or an interface circuit. The transceiving circuit, the interface or the interface circuit configured to implement receiving and transmitting functions may be separate or integrated together. The transceiving circuit, the interface or the interface circuit may be configured to read and write codes/data, or the transceiving circuit, the interface or the interface circuit may be configured to transmit or deliver a signal.

In an implementation, the processor 1001 may be stored with a computer program 1003. The computer program 1003 runs on the processor 141 so that the communication device 1000 performs the method as described in the above method embodiments. The computer program 1003 may be solidified in the processor 1001, in which case the processor 1001 may be implemented by hardware.

In an implementation, the communication device 1000 may include a circuit that may implement the transmitting or receiving or communication function in the above method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver may further be fabricated by using various IC process technologies, such as complementary metal oxide semiconductor (CMOS), nMetal-oxide-semiconductor (NMOS), positive channel metal oxide semiconductor (PMOS), bipolar junction transistor(BJT), bipolar CMOS(BiCMOS), silicon germanium(SiGe) and gallium arsenide(GaAs).

The communication device described in the above embodiments may be a terminal (for example, the first terminal or the second terminal in the above method embodiments), but the scope of the communication device described in the disclosure is not limited, and the structure of the communication device may not be limited to FIG. 15. The communication device may be a stand-alone device or may be a part of a large device. For example, the communication device may be:
(1) a stand-alone IC, or a chip, or a system on chip or a subsystem;
(2) a set of one or more ICs, optionally, which may also include a storage component for storing data and a computer program;
(3) an ASIC, such as a Modem;
(4) a module that may be embedded within other devices;
(5) a receiver, a terminal device, a smart terminal device, a cellular phone, a wireless device, a handset, a mobile unit, a vehicle-mounted device, a network device, a cloud device, an artificial intelligence device, etc.; and
(6) others, and so forth.

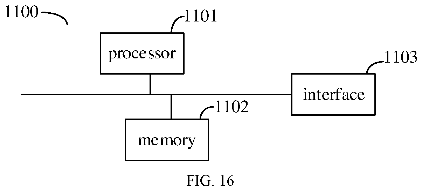

In the case that the communication device may be a chip or a system on chip (SoC), please refer to a structural diagram of a chip according to embodiments of the present disclosure shown in FIG. 16.

The chip 1100 includes a processor 1101 and an interface 1103. There may be one or more processors 1101, and there may be a plurality of interfaces 1103.

In the case that the chip is configured to implement the function of the first terminal in embodiments of the disclosure,
the interface 1103 is configured to receive code instructions and transmit the code instructions to the processor, and
the processor 1101 is configured to run the code instructions to perform the method for information transmission as described in some embodiments.

In the case that the chip is configured to implement the function of the second terminal in embodiments of the disclosure,
the interface 1103 is configured to receive code instructions and transmit the code instructions to the processor, and
the processor 1101 is configured to run the code instructions to perform the method for feedback information transmission as described in some embodiments.

In the case that the chip is configured to implement the function of the network device in embodiments of the disclosure,
the interface 1103 is configured to receive code instructions and transmit the code instructions to the processor, and
the processor 1101 is configured to run the code instructions to perform the method for feedback information transmission as described in some embodiments.

Optionally, the chip 1100 further includes a memory 1102. The memory 1102 is configured to save a necessary computer program and data.

Those skilled in the related art may understand that, various illustrative logical blocks and steps listed in embodiments of the present disclosure, may be implemented by an electronic hardware, a computer software or a combination of an electronic hardware and a computer software. Whether the function is implemented by the hardware or the software depends on specific applications and design requirements for an overall system. Those skilled in the art may implement the functions by using various methods for each specific application, but such an implementation should not be understood as going beyond the protection scope of embodiments of the present disclosure.

A system for information transmission is further provided according to embodiments of the disclosure. The system includes the apparatus for feedback information transmission as the first terminal and the apparatus for feedback information transmission as the second terminal, in the embodiment shown in FIG. 14, or the system includes the apparatus for feedback information transmission as the first terminal and the apparatus for feedback information transmission as the second terminal, in the embodiment shown in FIG. 15.

A readable storage medium with instructions stored thereon is further provided in the disclosure. When the instructions are executed by a computer, steps in the any one method embodiment are implemented.

A computer program product is further provided. The computer program product implements functions of the above any one method embodiment when executed by a processor.

In the above embodiments, it may be implemented in whole or in part by software, hardware, firmware, or any combination. When implemented in software, it may be implemented in whole or in part in the form of a computer program product. The computer program product includes one or more computer programs. When the computer program is loaded and executed on a computer, the processes or functions described in the embodiments of the disclosure are generated in whole or in part. The computer may be a general-purpose computer, a special-purpose computer, a computer network, or other programmable device. The computer program may be stored in or transferred from one to another computer-readable storage medium, for example, the computer program may be transferred from a website, a computer, a server, or a data center to another website, another computer, another server or another data center through wired means (such as a coaxial cable, an optical fiber, a digital subscriber line (DSL)) or wireless means (such as infrared, wireless, microwave, etc.). The computer-readable storage medium may be any available medium that may be accessed by a computer or a data storage device such as a server, a data center, etc. that contains one or more available media integrated. The available media may be magnetic media (e.g., a floppy disk, a hard disk, a tape), optical media (e.g., a high-density digital video disc, DVD), or semiconductor media (e.g., a solid state disk, SSD) etc.

Those skilled in the art may understand that the first, second, and other numerical numbers involved in the disclosure are only for convenience of description and are not used to limit the scope of the embodiments of the disclosure and also indicate a sequential order.

The term "at least one" in the disclosure can also be described as one or more, and "a plurality of" may be two, three, four or more, which is not limited by the disclosure. In the embodiments of the disclosure, for a technical feature, the technical feature is distinguished by "first", "second", "third", "A", "B", "C" and "D", etc. The technical features described in "first", "second", "third", "A", "B", "C" and "D" are in no particular order or size sequence.

The corresponding relationships shown in each table in the disclosure may be configured or predefined. The values of the information in each table are only examples and may be configured as other values, which is not limited by the disclosure. When configuring the correspondence between information and each parameter, it is not necessarily required to configure all the correspondences shown in each table. For example, in the table in the disclosure, the corresponding relationships shown in some rows may not be configured. For another example, appropriate deformation adjustments may be made based on the above tables, such as splitting, merging, etc. The names of the parameters shown in the titles of the above tables may also be other names that may be understood by the communication device, and the values or expressions of the parameters may also be other values or expressions that may be understood by the communication device. When implementing the above tables, other data structures may also be used, such as arrays, queues, containers, stacks, linear lists, pointers, linked lists, trees, graphs, structures, classes, heaps, hash tables, etc.

Predefinition in the disclosure may be understood as definition, pre-definition, storage, pre-storage, pre-negotiation, pre-configuration, solidification, or pre-burning.

Those skilled in the art may be aware that the units and algorithm steps of each example described in conjunction with the embodiments disclosed herein can be implemented with electronic hardware, or a combination of computer software and electronic hardware. Whether these functions are executed in hardware or software depends on a specific application and design constraints of the technical solution. Those skilled in the art may implement the described functionality using different methods for each specific application, but such implementations should not be considered to go beyond the scope of the disclosure.

Those skilled in the art may clearly understand that for the convenience and conciseness of description, the specific working processes of the systems, devices and units described above may be referred to the corresponding processes in the foregoing method embodiments, which will not be repeated here.

The above are only specific embodiments of the disclosure, but the protection scope of the disclosure is not limited. Any person in the technical field may easily think of changes or substitutions within the technical scope disclosed in the disclosure, which should be covered by the protection scope of the disclosure. Therefore, the protection scope of the disclosure should be determined by the protection scope of the claims.

## Claims

1. A method for feedback information transmission, performed by a first terminal, comprising:
determining M physical sidelink feedback channel (PSFCH) time-frequency domain resources corresponding to a physical sidelink shared channel (PSSCH), where the M is an integer greater than 1;
determining a PSFCH for transmitting hybrid automatic repeat request (HARQ) information corresponding to the PSSCH; and
transmitting the HARQ information on the determined PSFCH.

2. The method according to claim 1, wherein determining the M PSFCH time-frequency domain resources corresponding to the PSSCH comprises:
determining the M PSFCH time-frequency domain resources corresponding to the PSSCH according to a sub-channel number of the PSSCH, a time unit number of the PSSCH, and a mapping parameter between the PSSCH and the PSFCH, where the mapping parameter is M.

3. The method according to claim 1 or 2, wherein the time unit is a slot.

4. The method according to claim 1, wherein determining the M PSFCH time-frequency domain resources corresponding to the PSSCH comprises:
determining a preset duration; and
determining a number of the PSFCH time-frequency domain resources corresponding to the PSSCH is M.

5. The method according to claim 4, further comprising:
determining a position of a first of the PSFCH time-frequency domain resources corresponding to the PSSCH; and
determining the M PSFCH time-frequency domain resources corresponding to the PSSCH according to the position of the first of the PSFCH time-frequency domain resources, the preset duration and the number M, wherein the preset duration is a time interval between two adjacent PSFCH time-frequency domain resources in the M PSFCH time-frequency domain resources.

6. The method according to claim 4 or 5, wherein the preset duration is an integer multiple of a PSFCH resource period.

7. The method according to any one of claims 1 to 6, wherein determining the PSFCH for transmitting the HARQ information corresponding to the PSSCH comprises:
performing a listen before talk (LBT) on M PSFCHs one by one; and
in response to the LBT on an Nth PSFCH being successful, determining the Nth PSFCH is the PSFCH for transmitting the HARQ information corresponding to the PSSCH, where N is an integer greater than 1 and less than or equal to M.

8. The method according to any one of claims 1 to 7, wherein different PSFCH frequency domain resources corresponding to different PSSCHs on a same slot are determined based on frequency division multiplexing (FDM), the different PSFCH frequency domain resources corresponding to the different PSSCHs are indicated by means of a physical resource block (PRB) set on a frequency domain, and the PRB set is indicated by a bitmap.

9. The method according to any one of claims 1 to 7, wherein a basic sequence transmitted on the PSFCH adopts a cyclic shift to distinguish pieces of HARQ information for a plurality of PSSCHs, transmission of which on the same PSFCH time-frequency domain resource is supported, and different cyclic shift values correspond to different pieces of HARQ information for the plurality of PSSCHs.

10. The method according to any one of claims 1 to 7, wherein different codebooks correspond to different pieces of HARQ information corresponding to the PSSCHs.

11. A method for feedback information transmission, performed by a second terminal, comprising:
determining M physical sidelink feedback channel (PSFCH) time-frequency domain resources corresponding to a physical sidelink shared channel (PSSCH), where the M is an integer greater than 1;
listening to the M PSFCH time-frequency domain resources; and
receiving hybrid automatic repeat request (HARQ) information corresponding to the PSSCH on the M PSFCH time-frequency domain resources.

12. The method according to claim 11, wherein a PSFCH is determined based on frequency division multiplexing (FDM), frequency domain resources of the PSFCH corresponding to the PSSCH are indicated by means of a physical resource block (PRB) set on a frequency domain, and the PRB set is indicated by a bitmap.

13. The method according to claim 11, wherein a basic sequence transmitted on the PSFCH adopts a cyclic shift to distinguish pieces of HARQ information for a plurality of PSSCHs, transmission of which on the same PSFCH time-frequency domain resource is supported, and different cyclic shift values correspond to different pieces of HARQ information for the plurality ofPSSCHs.

14. The method according to claim 11, wherein different codebooks correspond to different pieces of HARQ information corresponding to PSSCHs.

15. An apparatus for information transmission, comprising:
a processing module, configured to determine M physical sidelink feedback channel (PSFCH) time-frequency domain resources corresponding to one physical sidelink shared channel (PSSCH) time-frequency domain resource, where the M is an integer greater than 1; and determine the PSFCH for transmitting hybrid automatic repeat request (HARQ) information corresponding to the PSSCH; and
a transceiving module, configured to transmit the HARQ information on the determined PSFCH.

16. An apparatus for information transmission, comprising:
a processing module, configured to determine M physical sidelink feedback channel (PSFCH) time-frequency domain resources corresponding to one physical sidelink shared channel (PSSCH) time-frequency domain resource, where the M is an integer greater than 1; and listen to the M PSFCH time-frequency domain resources; and
a transceiving module, configured to receive hybrid automatic repeat request (HARQ) information corresponding to the PSSCH on the M PSFCH time-frequency domain resources.

17. A communication device, comprising a processor and a memory storing a computer program, wherein when the computer program is executed by the processor, the communication device is caused to perform the method according to any one of claims 1 to 10.

18. A communication device, comprising a processor and a memory storing a computer program, wherein when the computer program is executed by the processor, the communication device is caused to perform the method according to any one of claims 11 to 14.

19. A communication device, comprising a processor and an interface circuit;
wherein the interface circuit is configured to receive code instructions and transmit the code instructions to the processor; and
the processor is configured to run the code instructions to perform the method according to any one of claims 1 to 10.

20. A communication device, comprising a processor and an interface circuit;
wherein the interface circuit is configured to receive code instructions and transmit the code instructions to the processor; and
the processor is configured to run the code instructions to perform the method according to any one of claims 11 to 14.

21. A computer-readable storage medium storing instructions, wherein when the instructions are executed, the method according to any one of claims 1 to 10 is caused to be implemented.

22. A computer-readable storage medium storing instructions, wherein when the instructions are executed, the method according to any one of claims 11 to 14 is caused to be implemented.
